# EUROPÄISCHE PATENTSCHRIFT

(11) **EP 2 769 525 B1**
(45) Veröffentlichungstag und Bekanntmachung des Hinweises auf die Patenterteilung: **29.08.2018**
(21) Anmeldenummer: 12780675.0
(22) Anmeldetag: 02.10.2012
(51) Int. Cl.: H04L 29/06, H04L 12/413

(54) **VERFAHREN ZUM VERARBEITEN EINES DATENPAKETS**
METHOD FOR PROCESSING A DATA PACKET
PROCÉDÉ DE TRAITEMENT D'UN PACKET DE DONNÉES

(30) Priorität: 19.10.2011 DE 102011084740
(43) Veröffentlichungstag der Anmeldung: 27.08.2014
(73) Patentinhaber: Robert Bosch GmbH, 70442 Stuttgart (DE)
(72) Erfinder: BLASCHKE, Volker, 71642 Ludwigsburg (DE); KRIEGER, Soeren, 72770 Reutlingen (DE); LEE, Jeffrey, Summit NJ-07901 (US); SCHNITZER, Reiner, 72762 Reutlingen (DE); VOGEL, Guenter, 72760 Reutlingen (DE); LOTHSPEICH, Timo, 70839 Gerlingen (DE); MALLOK, Juergen, 72760 Reutlingen (DE); PFEFFERSEDER, Anton, 82054 Sauerlach (DE)
(86) Internationale Anmeldenummer: PCT/EP2012/069407
(87) Internationale Veröffentlichungsnummer: WO 2013/056976

(56) Entgegenhaltungen:
- WO-A1-2010/005775
- US-A1- 2007 133 586
- US-A1- 2008 304 432
- US-A1- 2011 242 088

## Beschreibung

Die Erfindung betrifft ein Verfahren zum Verarbeiten eines Datenpakets und einen Netzwerkknoten.

### Stand der Technik

Bei der paketorientierten Übertragung von Informationen werden die zu übertragenden Informations- oder Applikations-Daten innerhalb eines Datenpakets als sogenannte Nutzdaten übertragen, die für die Steuerung des Informationsaustausches notwendig sind. Weiterhin umfasst das Datenpaket einen sogenannten Header, der zusätzliche unterschiedliche Kontrollinformationen umfasst. Das Datenpaket, das eine Kombination aus der sogenannten Payload, die die Nutzdaten umfasst, und dem Header aufweist, wird in der Regel über ein Kommunikationsnetzwerk als eine Einheit übertragen.

Für die Verarbeitung des Datenpakets in einem als Empfänger ausgebildeten Netzwerkknoten ist in der Regel eine Reihe an komplexen und energieintensiven Signalverarbeitungsschritten notwendig, bevor die übermittelten Informationen zur weiteren Verarbeitung in der Sicherungsschicht vorliegen. Erst dann kann eine Auswertung der Informationen des Headers sowie der in der Payload als Nutzdaten vorliegenden Informationen durchgeführt werden.

Weiterhin ist auf Ebene der Sicherungsschicht, bspw. Destination MAC in einem Ethernet-Header, die Auswertung der Zieladresse eines empfangenen Datenpakets vorgesehen, wobei darüber entschieden wird, ob das gesamte Datenpaket überhaupt auszuwerten und weiterzuverarbeiten ist. Bei herkömmlichen Vorgehensweisen bedeutet dies, dass jeder Netzwerkknoten das empfangene Datenpaket zunächst in der physikalischen Schicht verarbeiten muss, bevor anschließend die Auswertung der Empfängeradresse erfolgen und eine Entscheidung über die Weiterverarbeitung der Payload-Daten getroffen werden kann. Dies hat zur Folge, dass alle Netzwerkknoten, die das Datenpaket erhalten, eine komplexe Signalverarbeitung durchführen, die aber nur für den mindestens einen als Empfänger ausgebildeten Netzwerkknoten, d.h. einen Netzerkknoten bei einer Unicast-Übertragung oder mehrere Netzwerkknoten bei einer Multicast-Übertragung, notwendig ist, an den das Datenpaket tatsächlich gerichtet ist. Falls alle anderen Netzwerkknoten das Datenpaket ebenfalls auswerten, führt dies zu einem unnötig hohen Energieverbrauch.

In der Druckschrift WO 2010/005775 A1 ist beschrieben, dass Mehrfachträgerpakete (multiple carrier packets) für Daten und Einfachträgerpakete (single carrier packets) für Daten verarbeitet werden. Dabei ist ein Einfachträgerpaket als Header und ein Mehrfachträgerpaket als Payload ausgebildet. Der Header und die Payload können durch unterschiedliche Modi verarbeitet werden.

In der Druckschrift US 2007/133586 A1 ist offenbart, dass ein Datenpaket, das einen Header und aine Payload umfasst, verarbeitet wird, wobei der Header auf eine erste Weise decodiert und eine Payload auf eine zweite Weise decodiert wird.

In der Druckschrift US 2008/0304432 A1 ist ein System und ein Verfahren zum energieeffizienten Betreiben eines Funkfrequenz-Transceivers beschrieben, wobei zwei unterschiedliche Empfangseinheiten mit unterschiedlicher Leistungsaufnahme vorgesehen sind, um unterschiedliche Teile eines empfangenen Datenpakets zu verarbeiten.

### Offenbarung der Erfindung

Vor diesem Hintergrund werden ein Verfahren und ein Netzwerkknoten mit den Merkmalen der unabhängigen Patentansprüche vorgestellt. Weitere Ausgestaltungen der Erfindung ergeben sich aus den abhängigen Patentansprüchen und der Beschreibung.

Mit der Erfindung ist eine Verarbeitung eines Datenpakets möglich, das einen Header, der auch als erster Header neben einem denkbaren zweiten Header bezeichnet werden kann, und eine Payload mit Nutzdaten aufweist. Hierbei sind der erste Header und die Payload unterschiedlich strukturiert, so dass die Algorithmen zur Verarbeitung und Auswertung des ersten Headers und der Payload auf physikalischer Schicht eine unterschiedliche Anzahl an Verarbeitungsschritten und/oder Rechenoperationen und somit unterschiedliche Komplexitäten aufweisen.

Zum Verarbeiten des Datenpakets werden für den ersten Header und die Payload verschiedene, in der Regel voneinander getrennte sowie getrennt durchführbare Modi eingesetzt. Das Verarbeiten der genannten Komponenten des Datenpakets kann verschiedene Maßnahmen umfassen. Dabei können bei einer ersten Maßnahme zum Übertragen und somit zum Übermitteln des Datenpakets zwischen Netzwerkknoten eines Netzwerks als Modi ein Übertragungsmodus für den Header und ein Übertragungsmodus für die Payload verwendet werden. Dabei kann in Ausgestaltung der Erfindung der Header, üblicherweise ein erster Header, analog und die Payload digital übertragen werden.

Dasselbe gilt für ein Empfangen des Datenpakets durch einen Netzwerkknoten als weitere Maßnahme, wobei als Modi ein Empfangsmodus für den Header und ein Empfangsmodus für die Payload verwendet werden. In Ausgestaltung der Erfindung wird der Header analog empfangen und die Payload digital empfangen. Hierzu kann der Netzwerkknoten unterschiedliche Bereiche aufweisen, wobei in einem ersten Bereich eine Verarbeitung und somit auch ein Empfang des Headers nach einem für den Header vorgesehenen, bspw. analogen, Modus und in einem zweiten Bereich eine Verarbeitung und somit auch ein Empfang der Payload nach einem für die Payload vorgesehenen, bspw. digitalen, Modus durchgeführt wird.

Es können auch weitere Maßnahmen zum Verarbeiten des Datenpakets möglich sein, wobei jeweils für den Header ein Modus angewandt wird, der von dem Modus für die Payload getrennt ist. So kann bspw. bei einem Versenden des Datenpakets als weiterhin denkbare Maßnahme der Header von einem Netzwerkknoten mit einem ersten, bspw. analogen, Versandmodus für den Header und die Payload von demselben Netzwerkknoten mit einem zweiten, bspw. digitalen, Versandmodus für die Payload versendet werden.

In der Regel ist zur Durchführung des zweiten Modus und somit auch eines zweiten Übertragungs-, Versand-, Empfangs- und/oder Verarbeitungsmodus eine größere Anzahl an Verarbeitungsschritten bzw. Rechenoperationen als für den ersten Modus, bspw. ersten Übertragungs-, Versand-, Empfangs- und/oder Verarbeitungsmodus, erforderlich. In Ausgestaltung erfordert der erste Modus einen Verarbeitungsschritt. Der zweite Modus erfordert mindestens einen Verarbeitungsschritt bzw. mindestens eine Rechenoperation mehr als der erste Modus.

Bei einer Ausführung des erfindungsgemäßen Verfahrens kann durch die Maßnahme, die Informationen eines Headers eines Datenpakets mit einem deutlich einfacheren Übertragungsmodus als die eigentlichen Nutzdaten in der Payload des Datenpakets zu übermitteln, u. a. in einem Netzwerkknoten der Energiebedarf, der dazu erforderlich ist, in dem Datenpaket eine Zieladresse und somit eine Empfängeradresse zu ermitteln, reduziert werden. Das Verfahren kann zum Beispiel für ein als Netzwerk ausgebildetes Kommunikationssystem mit sehr aufwendiger physikalischer Signalverarbeitung und strikter Layertrennung und somit Trennung von Schichten entsprechend dem ISO/OSI-Schichtenmodell eingesetzt werden.

Im Rahmen der Erfindung können für paketvermittelnde Netzwerke, die zur Kommunikation ausgebildet sind, demnach zwei unterschiedliche Übertragungsmodi und somit unterschiedliche Modi zur Übermittlung der Daten und/oder von Informationen eines Headers sowie einer Payload eines Datenpakets eingesetzt werden. Die beiden unterschiedlichen Übertragungsmodi und somit Kommunikationsmodi für die Übertragung des Headers einerseits und der Payload andererseits erfordern unterschiedlich viele Verarbeitungsschritte bzw. Rechenoperationen und weisen unterschiedliche Komplexitäten auf. So umfasst ein analoger Kommunikationsmodus für den Header weniger Verarbeitungsschritte als ein digitaler Kommunikationsmodus, der für die Payload vorgesehen ist.

Die Menge der Daten innerhalb des Headers des Datenpakets ist in der Regel um Größenordnungen geringer als die Menge der Daten der Payload des Datenpakets. Um eine entsprechend gute Leistung bzw. Performance, d. h. eine hohe Datenrate und geringe Fehlerrate, bei der Übertragung der Daten der Payload zu erreichen, werden hierbei komplexe Übertragungsmodi oder -technologien eingesetzt. Dadurch steigt der mögliche Durchsatz der Daten, gleichzeitig aber auch der Aufwand für die Signalverarbeitung in der physikalischen Schicht des empfangenden Netzwerkknotens und somit auch der Energiebedarf der einzelnen Netzwerkknoten.

Für die Entscheidung, ob das aktuelle Datenpaket an den jeweiligen Netzwerkknoten adressiert ist, ist diese Komplexität jedoch nicht zwingend notwendig. Daher kann für die Übertragung der Informationen des Headers auch ein deutlich einfacherer Übertragungsmodus eingesetzt werden, als es für die Payload der Fall ist. Dadurch reduziert sich der Aufwand der Signalverarbeitung zur Adressauswertung in jedem Netzwerkknoten. Hierbei nutzen jeweils nur der Netzwerkknoten, der das Datenpaket sendet, und mindestens ein empfangender Netzwerkknoten, an den das Datenpaket gerichtet ist, den komplexen Signalverarbeitungspfad unter Nutzung des zweiten Modus. Alle anderen Netzwerkknoten verbleiben dagegen in dem ersten Modus geringerer Komplexität. Hierdurch kann eine deutliche Reduktion des Energiebedarfs für das Netzwerk als Gesamtsystem erreicht werden.

Bei der hier beschriebenen Ausgestaltung des Verfahrens wird zur Übertragung der Informationen des Headers ein erster Übertragungsmodus mit einer deutlich geringeren Anzahl an Verarbeitungsschritten als ein davon getrennter zweiter Übertragungsmodus zur Übertragung der Payload eingesetzt. Bei dem Übertragungsmodus für den Header kann z. B. eine Amplitudenmodulation verwendet werden. Zum Empfang und zur Auswertung dieses sogenannten Low Complexity Headers und somit eines Headers geringer Komplexität als Komponente eines Datenpakets ist in dem empfangenden Netzwerkknoten ein deutlich reduzierter Aufwand bei der Signalverarbeitung notwendig, woraus eine Gesamteinsparung an Energie resultiert.

Zur Umsetzung des Verfahrens sind in einer Ausgestaltung der Erfindung in einem als Empfänger ausgebildeten Netzwerkknoten getrennte Bereiche mit unterschiedlichen Empfangspfaden für unterschiedliche Komponenten eines Datenpakets vorgesehen, die jeweils unabhängig voneinander aktiviert oder deaktiviert werden können. Demnach kann ein Netzwerkknoten einen ersten Bereich mit einem ersten Empfangspfad für Header (Headerempfangspfad), einen zweiten Bereich mit einem zweiten Empfangspfad für Payloads (Payloadempfangspfad) und bei Bedarf auch mindestens einen weiteren Empfangspfad für mindestens eine weitere Komponente eines Datenpakets umfassen. Darüber hinaus ist zwischen den mindestens zwei voneinander unabhängigen Empfangspfaden eine geeignete Verschaltung vorgesehen, so dass eine Aktivierung des komplexen Empfangspfads, üblicherweise des Payloadempfangspfads, durch einen einfachen Empfangspfad, üblicherweise den Headerempfangspfad, über eine Aufwachinformation erreicht werden kann.

Weiterhin ist es möglich, einen einzigen Empfangspfad zu verwenden, der jedoch in verschiedenen Modi betrieben werden kann, nämlich einem ersten Modus (Headermodus) mit geringer Bandbreite und geringem Energieverbrauch zur Verarbeitung des Headers des Datenpakets und einem zweiten Modus (Payloadmodus) mit hoher Bandbreite und damit auch hohem Energieverbrauch zur Verarbeitung der Payload des Datenpakets. Zur Umsetzung dieser Ausgestaltung der Erfindung ist denkbar, dass ein Analog-Digital-Wandler als Komponente eines Netzwerkknotens bei der Verarbeitung z. B. verschiedene Abtastraten verwendet, d. h. eine Headerabtastrate für einen Header und eine Payloadabtastrate für eine Payload des Datenpakets.

Darüber hinaus kann der beschriebene Low Complexity Header dahingehend erweitert werden, dass auch kurze Kontrolldaten-Sequenzen auf MAC-Layerebene ausschließlich als Low Complexity Sequence übertragen werden. Solange diese Übertragung nicht mehr Zeit benötigt, als es bei einem Einsatz des komplexen Übertragungsmodus der Fall ist, besteht somit ein weiteres Potential zur Energieeinsparung.

Je nach Ausgestaltung der Erfindung kann zudem auch eine Kombination aus dem hier beschriebenen Low Complexity Header und dem traditionellen Paketaufbau eines Datenpakets zum Einsatz kommen. Zusätzlich ist ein Mischbetrieb unter Nutzung des traditionellen Ansatzes und des Low Complexity Headers denkbar. In diesem Fall ist eine entsprechende, zusätzliche Signalisierung, bspw. zur Kennzeichnung von übertragenen Datenpaketen und/oder von Vorgehensweisen zur Übertragung der Datenpakete, vorgesehen, um die Koexistenz und Kompatibilität beider Vorgehensweisen zu ermöglichen.

Der erfindungsgemäße Netzwerkknoten ist dazu ausgebildet, sämtliche Schritte des vorgestellten Verfahrens durchzuführen. Dabei können einzelne Schritte dieses Verfahrens auch von einzelnen Komponenten des Netzwerkknotens durchgeführt werden. Weiterhin können Funktionen des Netzwerkknotens oder Funktionen von einzelnen Komponenten des Netzwerkknotens als Schritte des Verfahrens umgesetzt werden. Außerdem ist es möglich, dass Schritte des Verfahrens als Funktionen wenigstens einer Komponente des Netzwerkknotens oder des Netzwerkknotens realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung ein Beispiel für ein Datenpaket.
- Figur 2: zeigt Diagramme eines aus dem Stand der Technik bekannten Beispiels zur Übertragung eines Datenpakets.
- Figur 3: zeigt Diagramme zu einer Ausführungsform des erfindungsgemäßen Verfahrens.
- Figur 4: zeigt in schematischer Darstellung eine erste Ausführungsform eines erfindungsgemäßen Netzwerkknotens.
- Figur 5: zeigt in schematischer Darstellung Beispiele für zweite Ausführungsformen erfindungsgemäßer Netzwerkknoten.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

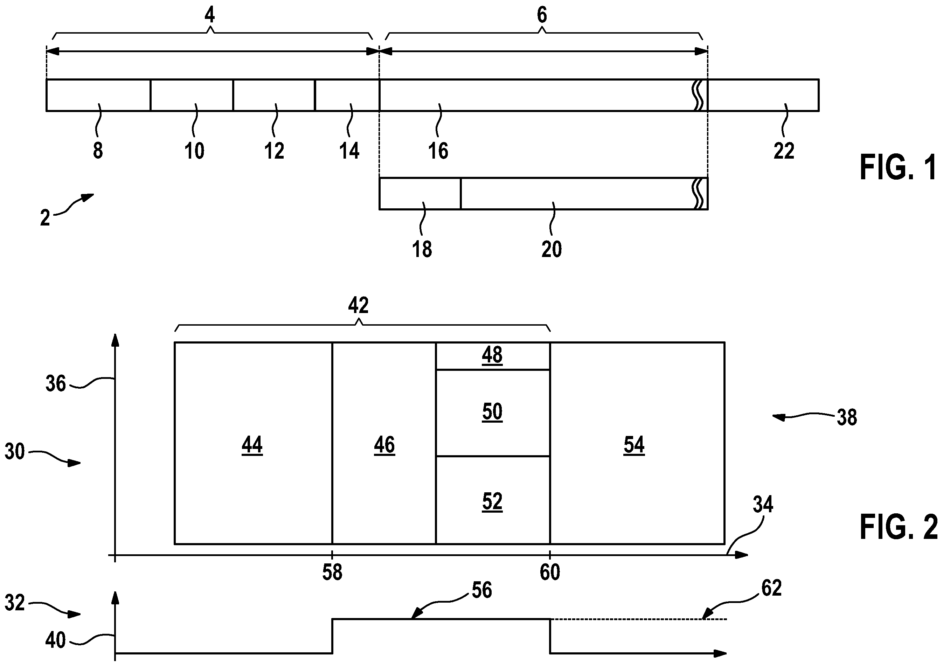

Figur 1 zeigt in schematischer Darstellung ein Beispiel für einen Aufbau eines Rahmens eines Datenpakets 2, wie es üblicherweise in einem als IP-Ethernet ausgebildeten Netzwerk unter Nutzung des Internetprotokolls (IP) zur Übermittlung von Daten verwendet wird. Für eine paketorientierte Übertragung wird das Internetprotokoll als ein Standardprotokoll für die Vernetzung von Einrichtungen eingesetzt.

Dieses Datenpaket 2 umfasst einen als Header 4 bezeichneten Datenkopf sowie eine Payload 6 auf einer Vermittlungs- und Sicherungsschicht für eine IP-Kommunikation über das Ethernet. Dabei weist der Header 4 als Einleitung ein erstes Feld mit einer Präambel 8, ein zweites Feld mit mindestens einer Zieladresse 10 (Destination Address) als Empfängeradresse, ein drittes Feld mit einer Quelladresse 12 (Source Address) sowie ein Kontrollfeld 14 (Contr.) auf. Die Nutzdaten 16 der Payload 6 können auch als sog. MAC-Data mit einer MAC- bzw. Media-Access-Control-Adresse bezeichnet werden. Anhand der Darstellung ist zu erkennen, dass der gesamte Rahmen der IP-Schicht als Payload 6 im Rahmen der darunter liegenden MAC-Schicht eingefügt wird. Die Nutzdaten 16 sind in der IP-Schicht in einen IP-Header 18, d. h. einen Datenkopf nach dem Internetprotokoll, und IP-Daten 20 unterteilt. Außerdem umfasst das Datenpaket 2 ein Feld für eine zyklische Redundanzprüfung 22 (CRC, Cyclic Redundancy Check).

Im Sinne des ISO/OSI-Schichtenmodells erfolgt die Verarbeitung der Informationen auf den verschiedenen Schichten unabhängig voneinander. Dies bedeutet, dass die Header-Informationen des MAC-Rahmens ausschließlich für die Verarbeitung und Übermittlung des Datenpakets auf MAC-Ebene notwendig sind. Die Informationen, d. h. der IP-Header 18 und die IP-Daten 20, im IP-Rahmen werden im MAC-Rahmen innerhalb der Nutzdaten 16 gekapselt.

Innerhalb des Headers 4 der MAC-Schicht ist das Feld mit der Zieladresse 10 ein wesentlicher Bestandteil. Dieses Feld enthält als Zieladresse 10 die Adresse mindestens eines als Ziel und somit als Empfänger vorgesehenen Netzwerkknotens, an den das Datenpaket 2 übermittelt werden soll.

Wird das Datenpaket 2 über ein als Kommunikationsnetzwerk ausgebildetes Netzwerk übertragen, empfangen alle Netzwerkknoten als angeschlossene Teilnehmer dieses Datenpaket 2 und werten das Feld mit der mindestens einen Zieladresse 10 aus. Entspricht die darin enthaltene Zieladresse 10 ihrer eigenen, wird das Datenpaket 2 weiter verarbeitet. Tritt keine Übereinstimmung auf, wird das empfangene Datenpaket 2 verworfen.

Abhängig von der eingesetzten Übertragungstechnologie auf physikalischer Ebene hat dieses Vorgehen zur Folge, dass bereits die gesamte Signalverarbeitung mindestens für die Zieladresse 10 in der physikalischen Schicht abgeschlossen sein muss, bevor eine Entscheidung über die tatsächliche Notwendigkeit zum Empfang des Datenpakets 2 getroffen werden kann.

Bekannte Vermittlungsknoten innerhalb eines Netzwerks, wie z. B. Ethernet Switches, werten die Zieladresse bereits aus, während diese empfangen wird. Dadurch ist es möglich, die durch einen Switch hervorgerufene Verzögerungszeit gering zu halten. Das Datenpaket 2 wird bereits an dem Port (Anschluss), über den der als Empfänger vorgesehene Netzwerkknoten zu erreichen ist, weitergesendet, bevor es im Switch vollständig eingetroffen ist.

Die beiden Diagramme 30, 32 aus Figur 2 umfassen eine Zeitachse als Abszisse 34. Entlang einer Ordinate 36 des ersten Diagramms 30 ist ein Maß für einen Signalbearbeitungsaufwand eines Netzwerkknotens innerhalb eines Netzwerks aufgetragen, der ein Datenpaket 38, wie es beim Stand der Technik verwendet wird, empfängt. Entlang einer Ordinate 40 des zweiten Diagramms 32 ist ein Maß für einen Energieaufwand des empfangenden Netzwerkknotens sowie sämtlicher weiterer Netzwerkknoten des Netzwerks aufgetragen.

Das versendete und von nur einem Netzwerkknoten zu empfangende Datenpaket 38 umfasst einen herkömmlichen Header 42 von hoher Komplexität, der wiederum ein Feld mit einer Präambel 44, ein Feld mit einem Pilotsymbol 46, ein Kontrollfeld 48, ein Feld mit einer Zieladresse 50 und ein Feld mit ein Quelladresse 52 umfasst. Außerdem umfasst das Datenpaket 38 eine Payload 54, die die zu übertragenden Nutzdaten aufweist.

Anhand einer durchgezogenen Linie 56 innerhalb des zweiten Diagramms 32 ist zu erkennen, dass sämtliche Netzwerkknoten des Netzwerks den gesamten Header 42 empfangen und auch das Feld mit dem Pilotsymbol 46, das Kontrollfeld 48, sowie die Felder mit der Zieladresse 50 und der Quelladresse 52 bearbeiten. Hierbei sind sämtliche Netzwerkknoten zwischen einem ersten Zeitpunkt 58 und einem zweiten Zeitpunkt 60 aktiv, wobei für alle Netzwerkknoten eine Energieaufnahme entsteht. Hierbei untersucht jeder Netzwerkknoten durch Überprüfung der Zieladresse 50, ob das empfangene Datenpaket 38 an ihn gerichtet ist oder nicht.

Im vorliegenden Beispiel ist das Datenpaket 38 nur an den Netzwerkknoten gerichtet, dem die Zieladresse 50 zugeordnet ist. Dieser bearbeitet ab dem zweiten Zeitpunkt 60 als einziger Netzwerkknoten die Payload 54 und ist währenddessen aktiv, wobei nur noch für diesen einen Netzwerkknoten eine Energieaufnahme entsteht, was im zweiten Diagramm 32 als gepunktete Linie 62 verdeutlicht ist.

Abhängig von den jeweiligen Randbedingungen (Datenrate, Fehlerrobustheit usw.) eines Netzwerks werden immer komplexere Technologien zur Kommunikation eingesetzt, bei denen eine Signalaufbereitung in einem sendenden Netzwerkknoten und einem empfangenden Netzwerkknoten eine steigende Komplexität aufweist. Je nach eingesetzter Technologie ist somit bereits für den Empfang und die Auswertung von Daten des Headers eine aufwendige Signalverarbeitung notwendig. Dieses Vorgehen ist vor allem im Umfeld von eingebetteten Netzwerken zur Kommunikation problematisch, da hier nur eine begrenzte Energieaufnahme möglich ist. Daher ist eine möglichst geringe Komplexität für die Auswertung der mindestens einen Zieladresse von mindestens einem empfangenden Netzwerkknoten wünschenswert.

Bei einer möglichen Ausführungsform eines erfindungsgemäßen Verfahrens zum Verarbeiten eines Datenpakets, das einen ersten Header (Datenpaketkopf) und eine Payload (Nutzdaten) umfasst, wird der erste Header durch einen oder mit einem ersten Modus und die Payload durch einen oder mit einem zweiten Modus verarbeitet, d. h. der üblicherweise erste Header und die Payload können getrennt verarbeitet, d. h. versendet übertragen und/oder empfangen werden.

Der zweite Modus erfordert eine größere Anzahl an Verarbeitungsschritten bzw. Rechenoperationen als der erste Modus, somit ist der erste Modus weniger komplex als der zweite Modus. Die beiden Modi werden voneinander getrennt ausgeführt. Die beiden Modi unterscheiden sich bspw. durch verschiedene Modulationsverfahren voneinander. Alternativ oder ergänzend kann der erste Modus für den ersten Header analoge Verarbeitungsverfahren und der zweite Modus für die Payload und ggf. den zweiten Header digitale Verarbeitungsverfahren umfassen.

Die mögliche Ausführungsform des erfindungsgemäßen Verfahrens unterscheidet sich von der bekannten Vorgehensweise dadurch, dass nach dem Empfang der Zieladresse die nicht betroffenen Netzwerkknoten in der Regel nicht weiter aktiv sind und mindestens ein angesprochener Netzwerkknoten einen Empfangspfad oder ein Empfangsmodul auf eine vollständige Empfangsbandbreite stellt und zum Empfangen des Datenpakets benötigte Energie aufwendet. In der Regel ist zu diesem Zeitpunkt nur der eine angesprochene Netzwerkknoten aktiv.

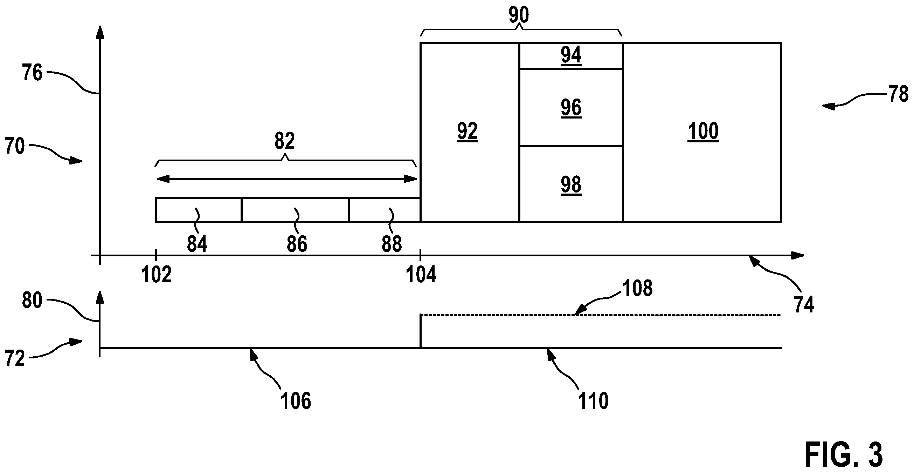

Die beiden Diagramme 70, 72 aus Figur 3 zu einer Ausführungsform des erfindungsgemäßen Verfahrens weisen ebenfalls eine Zeitachse als Abszisse 74 auf. Das erste oben dargestellte Diagramm 70 weist eine Ordinate 76 auf, entlang der ein Maß für einen Signalbearbeitungsaufwand eines Netzwerkknotens innerhalb eines Netzwerks aufgetragen ist, der ein bei einer Ausführungsform der Erfindung übermitteltes Datenpaket 78 empfängt. Entlang einer Ordinate 80 des zweiten Diagramms 72 ist ein Maß für einen Energieaufwand des empfangenden Netzwerkknotens und auch sämtlicher Netzwerkknoten des Netzwerks aufgetragen.

Das bei der Ausführungsform der Erfindung verwendete Datenpaket 78 umfasst einen ersten, schlanken Header 82, der eine geringe Komplexität aufweist. Dieser erste Header 82 von geringer Komplexität umfasst ein Feld mit einer Präambel 84, ein Adressfeld 86 und ein Kontrollfeld 88.

Weiterhin umfasst das Datenpaket 78 einen zweiten Header 90, der eine hohe, herkömmliche Komplexität aufweist. Dieser zweite Header 90 von hoher Komplexität umfasst ein Feld mit einem Pilotsymbol 92, ein Kontrollfeld 94, ein Feld mit einer Zieladresse 96 und ein Feld mit einer Quelladresse 98. Außerdem umfasst das Datenpaket 78 eine Payload 100 mit Nutzdaten.

Zum Übertragen des Datenpakets 78 wird für den ersten Header 82 ein als erster Übertragungsmodus ausgebildeter erster Modus und für die Payload 100 ein als zweiter Übertragungsmodus ausgebildeter zweiter Modus verwendet. Der zweite Header 90, der eine höhere Komplexität als der erste Header 82 aufweist, wird mit dem zweiten Modus verarbeitet.

Innerhalb eines Zeitraums, der hier durch einen ersten Zeitpunkt 102 und einen zweiten Zeitpunkt 104 begrenzt ist, empfängt jeder Netzwerkknoten des Netzwerks den ersten Header 82 des Datenpakets 78 und untersucht den ersten Header 82 daraufhin, ob das Datenpaket 78 an ihn, d. h. den jeweiligen Netzwerkknoten, gerichtet ist. Hierbei wird u. a. ein Inhalt des Adressfelds 86 überprüft. Das Adressfeld 86 umfasst zumindest eine Information über mindestens eine Zieladresse, die mindestens einem Netzwerkknoten, für den das Datenpaket 78 vorgesehen ist, zugeordnet ist. Da der erste Header 82 eine geringe Komplexität aufweist, ergibt sich jedoch für alle Netzwerkknoten des Netzwerks nur eine geringe Energieaufnahme, wie durch die erste Linie 106 bis zum zweiten Zeitpunkt 104 angedeutet. Bis zum Abschluss der Untersuchung des ersten Headers 82 entscheidet jeder Netzwerkknoten, ob das Datenpaket an ihn gerichtet ist oder nicht.

Ab dem zweiten Zeitpunkt 104 bearbeitet nur jener mindestens eine Netzwerkknoten den zweiten Header 90, der eine hohe Komplexität aufweist, sowie die Payload 100 des Datenpakets 78. Hierbei ergibt sich nur für diesen mindestens einen Netzwerkknoten eine hohe Energieaufnahme, was in dem zweiten Diagramm 72 durch die gestrichelte Linie 108, die zu dem zweiten Zeitpunkt 104 beginnt, angedeutet ist. Für alle anderen Netzwerkknoten, an die das Datenpaket 78 nicht gerichtet ist, ergibt sich ab dem zweiten Zeitpunkt 104 eine geringe Energieaufnahme, was durch die Linie 110 ab dem zweiten Zeitpunkt 104 angedeutet ist.

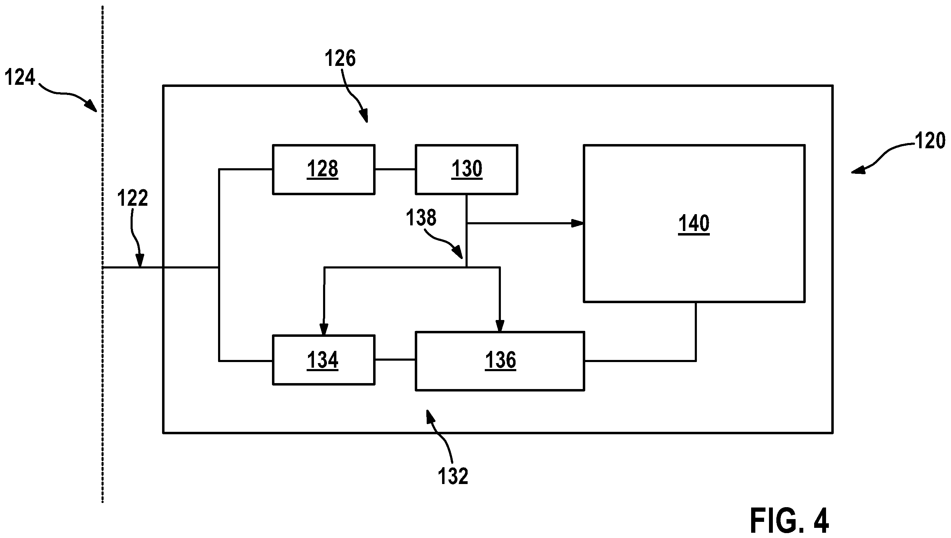

Die in Figur 4 schematisch dargestellte erste Ausführungsform des erfindungsgemäßen Netzwerkknotens 120 zum Verarbeiten mindestens eines Datenpakets, das einen ersten Header geringer Komplexität und eine Payload hoher Komplexität aufweist, ist über eine hier als Leitung ausgebildete Kommunikationsverbindung 122 mit weiteren Netzwerkknoten eines Netzwerks 124 verbunden, dem hier auch der gezeigte Netzwerkknoten 120 zugeordnet ist.

Dieser Netzwerkknoten 120 umfasst einen ersten Bereich 126, der zur Verarbeitung von Daten und/oder Signalen geringer Komplexität und somit üblicherweise zur Signalverarbeitung eines Headers 82 geringer Komplexität, ausgebildet ist, wie ihn bspw. das Datenpaket 78 aus Figur 3 aufweist. Dieser erste Bereich 126 umfasst einen Empfangspfad 128 zum Empfang eines Signals, das hier als Header 82 geringer Komplexität ausgebildet ist, sowie ein Adressauswertemodul 130 zum Auswerten eines Adressfelds 86 innerhalb des Headers 82 geringer Komplexität, das auch eine Information über eine Zieladresse umfasst, durch die definiert ist, an welchen Netzwerkknoten 120 das Datenpaket 78 adressiert ist. Dabei wird überprüft, ob das Datenpaket an den Netzwerkknoten 120 gerichtet ist oder nicht.

Außerdem umfasst der Netzwerkknoten 120 einen zweiten Bereich 132 zum Auswerten von Daten und/oder Signalen, die eine hohe, herkömmliche Komplexität aufweisen. Der zweite Bereich 132 umfasst einen Empfangspfad 134 zum Empfang eines Signals, das hier als zweiter Header 90 hoher Komplexität und/oder als Payload 100 des in Figur 3 dargestellten Datenpakets ausgebildet sein kann. Weiterhin umfasst der zweite Bereich 132 ein Datenverarbeitungsmodul 136, das zum Verarbeiten von Daten des zweiten Headers 90 und/oder der Nutzdaten des Datenpakets 78 ausgebildet ist. Der Netzwerkknoten 120 ist dazu ausgebildet, den Header 82 nach einem ersten Modus und die Payload 100 nach einem zweiten Modus zu bearbeiten, d. h. zu versenden, zu empfangen und/oder zu prüfen.

Üblicherweise ist der erste Bereich 126 zum Verarbeiten des ersten Headers 82 nach einem ersten, bspw. analogen, Modus und der zweite Bereich 132 zum Verarbeiten der Payload 100 nach einem zweiten, bspw. digitalen, Modus ausgebildet. Weiterhin erfordert der zweite Modus, der in dem zweiten Bereich 132 ausgeführt wird, eine größere Anzahl an Verarbeitungsschritten als der im ersten Bereich 126 auszuführende erste Modus.

Bei einer Ausführung des Verfahrens durch die in Figur 4 gezeigte Ausführungsform des Netzwerkknotens 120 wird zu dem ersten Zeitpunkt 102, wie er in den Diagrammen aus Figur 3 angedeutet ist, zumindest der erste Header 82 des Datenpakets 78 über die Kommunikationsverbindung 122 empfangen. Unabhängig davon, ob das vollständige Datenpaket 78 oder lediglich der erste Header 82 in Empfang genommen wird, erfolgt ab dem ersten Zeitpunkt 102 lediglich eine Untersuchung des ersten Headers 82. Diese Untersuchung ist bis zum zweiten Zeitpunkt 104 abgeschlossen, wobei bis dahin darüber entschieden wird, ob das Datenpakt 78 an den Netzwerkknoten 120 gerichtet ist oder nicht.

Falls sich aus den Informationen innerhalb des ersten Headers 82 geringer Komplexität ergibt, dass das Datenpaket 78 nicht an den Netzwerkknoten 120 gerichtet ist, wird es verworfen und nicht weiter verarbeitet.

Falls sich jedoch bei der Untersuchung des ersten Headers 82 geringer Komplexität ergibt, dass das Datenpaket 78 für den Netzwerkknoten 120 vorgesehen und somit an diesen gerichtet und/oder adressiert ist, werden weitere Komponenten des Datenpakets 78, d. h. der zweite Header 90 hoher Komplexität sowie die Payload 100 dem zweiten Bereich 132 und somit dem Netzwerkknoten 120 zur Verarbeitung zugeführt. Diese Verarbeitung kann zum zweiten Zeitpunkt 104 von dem Adressauswertemodul 130 aktiviert werden. Hierzu kann das Adressauswertemodul 130 an den Empfangspfad 134 und/oder das Datenverarbeitungsmodul 136 eine Aufwachinformation 138 (wake-up) bereitstellen und demnach übermitteln, durch die ein Empfang der weiteren Komponenten des Datenpakets durch den Empfangspfad 134 und deren Verarbeitung durch das Datenverarbeitungsmodul 136 ausgelöst wird.

Weiterhin umfasst der Netzwerkknoten ein hier von den beiden beschriebenen Bereichen 126, 132 getrenntes Anwendungsmodul 140, dem jedoch Daten des Datenpakets 78 zur weiteren Anwendung übermittelt werden können. Dies kann bedeuten, dass die Komponenten des ersten Bereichs 126 dem Anwendungsmodul 140 Daten des ersten Headers 82 und/oder Daten, die auf dem ersten Header 82 beruhen, übermitteln. Die Komponenten des zweiten Bereichs können dem Anwendungsmodul 140 Daten des zweiten Headers 90 und/oder der Payload 100 sowie Daten, die auf dem zweiten Header 90 und/oder der Payload 100 beruhen, übermitteln.

Ein Netzwerk 124, über das ein Datenpaket übermittelt und/oder gesendet wird, weist als Teilnehmer üblicherweise mindestens zwei erfindungsgemäße Netzwerkknoten 120 auf.

Weiterhin ist es möglich, dass zur Durchführung des Verfahrens auch das ISO/OSI-Schichtenmodell verwendet werden kann, wie es für das anhand von Figur 1 beschriebenen Datenpakets 2 zur Anwendung kommt. Ein beschriebener erfindungsgemäßer Netzwerkknoten 120 kann als Komponente eines Netzwerks 124 ausgebildet sein, das als Ethernet ausgebildet ist, in dem Datenpakete 78 nach dem IP-Protokoll verarbeitet und zwischen Netzwerkknoten 78 übertragen werden. Außerdem ist es möglich, die Erfindung für ein sogenanntes eingebettetes Netzwerk auszuführen, wobei zumindest ein Netzwerkknoten und somit ein Netzwerk in einer technischen Einrichtung, bspw. in einem Kraftfahrzeug, eingebettet ist.

Der beschriebene erste Header 82 unterscheidet sich von dem zweiten Header 90 und der Payload 100 dadurch, dass innerhalb des ersten Headers 82 Daten, bspw. Adressdaten in dem Adressfeld 86, als einfacher Bitstrom übertragen werden. Die einzelnen Datenbits dieser Daten werden direkt mit einem geeigneten analogen oder digitalen Übertragungsverfahren geringer Komplexität, z. B. Amplituden-, Frequenz- oder Phasenmodulation, und mit geringer Stufenanzahl, übertragen.

Die Daten des zweiten Headers 90 und der Payload 100 werden dagegen mittels eines höherwertigen digitalen Modulationsverfahrens, z. B. Quadraturamplitudenmodulation, übertragen.

Weiterhin unterscheidet sich der erste Header 82 von dem zweiten Header 90 und/oder der Payload 100 dadurch, dass die vom ersten Header 82 genutzte Bandbreite im Frequenzspektrum deutlich geringer ist, als die genutzte Bandbreite des zweiten Headers 90 und/oder der Payload 100.

Aus diesen Eigenschaften resultiert für den Empfang und die Auswertung der unterschiedlichen Bereiche des Datenpakets 78, d. h. des ersten Headers 82 sowie des zweiten Headers 90 und der Payload 100, dass die Komplexität der Hardware, wie bspw. die notwendigen Analog-Digital-Wandler, sowie die Komplexität der Auswertungsalgorithmen für den ersten Header 82 deutlich geringer sind als für den zweiten Header 90 und die Payload 100 der Fall ist.

Eine Ausgestaltung der Erfindung umfasst den Einsatz eines analogen Übertragungsverfahrens für den ersten Header 82. In diesem Fall findet die Auswertung des ersten Headers 82 ausschließlich analog statt, während für die Auswertung des zweiten Headers 90 und der Payload 100, für die ein digitales Übertragungsverfahren eingesetzt wird, eine Digitalisierung des Empfangssignals vorgesehen ist.

Für einen Netzwerkknoten kann dies bedeuten, dass im genannten Fall sowohl ein rein analoger erster Empfangspfad mit entsprechender analoger Auswertelogik für den ersten Header 82 und ein digitaler Empfangspfad mit entsprechender digitaler Signalverarbeitung für den zweiten Header 90 und die Payload 100 vorgesehen sind, wobei der analoge Empfangspfad 128 durch eine deutlich geringere Komplexität und einen deutlich geringeren Energieverbrauch im Vergleich zum digitalen zweiten Empfangspfad 134 charakterisiert ist.

In Ausgestaltung wird der erste Header 82 durch einen analogen Modus verarbeitet. Die Payload 100 sowie der zweite Header 90, sofern dieser vorgesehen ist, wird bzw. werden durch einen digitalen Modus verarbeitet. Bei einer Umsetzung des Verfahrens ergibt sich somit u. a., dass eine Komplexität zur Auswertung des ersten Headers 82 im Vergleich zur Auswertung der Payload 100 deutlich geringer ist.

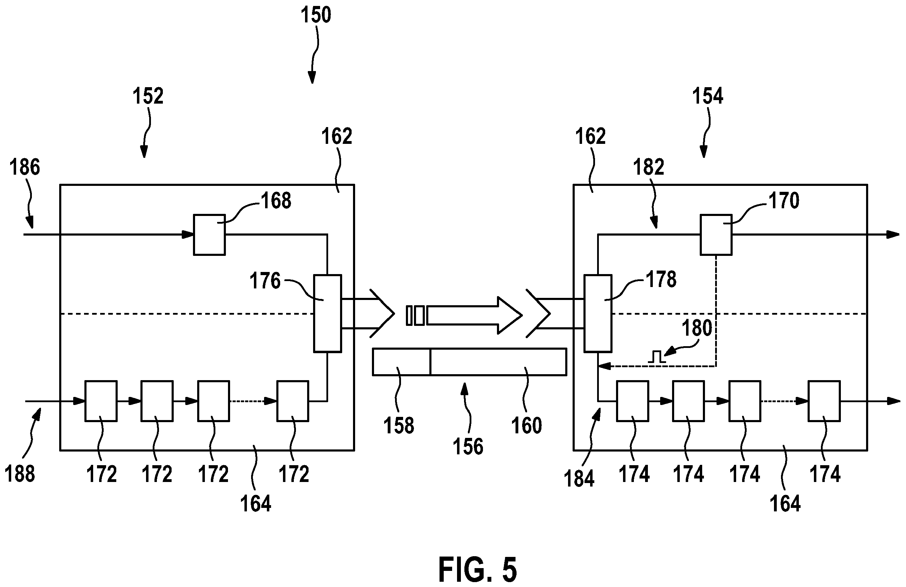

Figur 5 zeigt in schematischer Darstellung ein weiteres Beispiel für ein Netzwerk 150, das weitere Ausführungsformen von erfindungsgemäßen Netzwerkknoten 152, 154 umfasst. In einer weiteren Ausführungsform des erfindungsgemäßen Verfahrens, die anhand von Figur 5 beschrieben werden soll, ist vorgesehen, dass ein erster Netzwerkknoten 152 dazu ausgebildet ist, ein Datenpaket 156 zu senden. Ein zweiter Netzwerkknoten 154 ist dazu ausgebildet, dieses Datenpaket 156 zu empfangen. Dabei umfasst das Datenpaket 156 einen ersten Header 158, der durch einen ersten Modus zu verarbeiten ist. Außerdem umfasst das Datenpaket 156 eine Payload 160, die ggf. durch einen zweiten Header ergänzt sein kann. Diese Payload 160 sowie der ggf. zweite Header ist bzw. sind im Unterschied zu dem ersten Header 158 durch einen zweiten Modus zu verarbeiten, der eine größere Komplexität als der erste Modus aufweist.

Beide hier gezeigten Netzwerkknoten 152, 154 weisen einen ersten Bereich 162 zum Verarbeiten des ersten Headers 158 durch Durchführung des ersten Modus sowie einen zweiten Bereich 164 zum Verarbeiten der Payload 160 und ggf. des zweiten Headers durch Durchführung des zweiten Modus auf. Dabei ist in der vorliegenden Ausführungsform der Erfindung vorgesehen, dass zur Verarbeitung des ersten Headers 158 mit dem ersten Modus lediglich ein Verarbeitungsschritt 168 im ersten Bereich 162 des ersten Netzwerkknotens 152 sowie ein Verarbeitungsschritt 170 im ersten Bereich 162 des zweiten Netzwerkknotens 154 erforderlich ist. Zur Verarbeitung der Payload 160 sowie ggf. des zweiten Headers durch den zweiten Modus sind jeweils mehrere Verarbeitungsschritte 172 im zweiten Bereich 164 des ersten Netzwerkknotens 152 und ebenfalls mehrere Verarbeitungsschritte 174 im zweiten Bereich 164 des zweiten Netzwerkknotens 154 erforderlich. Demnach ist eine Anzahl an Verarbeitungsschritten 172, 174 zur Durchführung des zweiten Modus größer als eine Anzahl von Verarbeitungsschritten 168, 170 zur Durchführung des ersten Modus.

Neben dem einen Verarbeitungsschritt 168 im ersten Bereich 162 zur Verarbeitung des ersten Headers mit dem ersten Modus und den mehreren Verarbeitungsschritten 172 im zweiten Bereich 164, die zur Verarbeitung der Payload 160 ausgebildet sind, weist der erste Netzwerkknoten 152 zum Senden des Datenpakets 156 ein Sendemodul 176 auf. Der zweite Netzwerkknoten weist neben dem ersten Bereich 162 zur Durchführung des einen Verarbeitungsschritts 170 nach dem ersten Modus und dem zweiten Bereich 164 mit den mehreren Verarbeitungsschritten 174 nach dem zweiten Modus ein Empfangsmodul 178 zum Empfangen des Datenpakets 156 und eine Komponente zur Bereitstellung einer Aufwachinformation 180 auf. Außerdem umfasst der zweite Netzwerkknoten 154 einen ersten Empfangspfad 182 für den ersten Header 158 sowie einen zweiten Empfangspfad 184 für die Payload 160 und ggf. den zweiten Header.

Es ist jedoch auch möglich, dass der erste Netzwerkknoten 152 ebenfalls zum Empfangen von Datenpaketen 156 ausgebildet ist und entsprechend der in Figur 5 gezeigten Darstellung ebenfalls ein Empfangsmodul 178, voneinander getrennte Empfangspfade 182, 184 für einen ersten Header 158 und eine Payload 160 sowie eine Komponente zur Bereitstellung einer Aufwachinformation 180 aufweist. Entsprechend kann der zweite Netzwerkknoten 154 auch zum Senden von Datenpaketen 156 ausgebildet sein und ebenfalls ein Sendemodul 176 aufweisen.

Bei der Ausführung des erfindungsgemäßen Verfahrens ist vorgesehen, dass Daten 186 für den ersten Header 158 dem ersten Netzwerkknoten 152 bereitgestellt und durch einen Verarbeitungsschritt 168 verarbeitet werden. Daten 188 zur Bereitstellung der Payload 160 werden dagegen durch mehrere Verarbeitungsschritte 172 verarbeitet. Die einfach verarbeiteten Daten 186 für den ersten Header sowie die mehrfach verarbeiteten Daten 188 für die Payload 160 werden zu dem Datenpaket 156 verknüpft, ausgehend von dem Sendemodul 176 des ersten Netzwerkknotens 172 übertragen und von dem Empfangsmodul 178 des zweiten Netzwerkknotens 154 empfangen. Dabei ist bei der beschriebenen Ausführungsform des erfindungsgemäßen Verfahrens vorgesehen, dass zunächst lediglich der erste Header 158 des empfangenen Datenpakets 156 über den ersten Empfangspfad 182 dem einen Verarbeitungsschritt 170 in dem ersten Bereich 162 für den ersten Modus zugeführt und einfach verarbeitet wird.

Weiterhin wird überprüft, ob Daten 188 des Datenpakets 156, in der Regel Daten der Payload 160 des Datenpakets 156, für den hier gezeigten zweiten Netzwerkknoten 154, der das Datenpakte 156 empfangen hat, vorgesehen sind oder nicht, was durch Überprüfung einer Adressierung des Datenpakets 156, die in dem ersten Header 158 angegeben ist, erfolgt.

Falls die Daten 188 der Payload 160 für den zweiten Netzwerkknoten 154 vorgesehen sind, wird unter Durchführung des einen Verarbeitungsschritts 170 nach dem ersten Modus die Aufwachinformation 180 aktiviert und einer Komponente des zweiten Bereichs 164 bereitgestellt, wodurch der zweite Empfangspfad 184 als Komponente des zweiten Bereichs 164 für die Payload 160 des Datenpakets 156 geöffnet und ein Empfang der Payload 160 ausgelöst wird. Erst unter dieser Voraussetzung wird die Payload 160 über den zweiten Empfangspfad 184 den mehreren Verarbeitungsschritten 174 im zweiten Bereich 164 des zweiten Netzwerkknotens 154 zugeführt und mehrfach verarbeitet. Nach der Verarbeitung der Payload 160 durch die mehreren Verarbeitungsschritte 174 nach dem zweiten Modus können dabei ermittelte Informationen zur weiteren Nutzung weitergeleitet werden.

Falls sich bei einer Überprüfung des ersten Headers 158 im ersten Bereich 162 durch den einen Verarbeitungsschritt 170 nach dem ersten Modus ergibt, dass die Payload 160 nicht für den zweiten Netzwerkknoten 154 vorgesehen ist, wird die Aufwachinformation 180 nicht aktiviert. Somit wird die Payload durch die Verarbeitungsmodule 174 nach dem zweiten Modus nicht verarbeitet, wodurch u. a. Energie gespart werden kann.

## Patentansprüche

1. Verfahren zum Verarbeiten mindestens eines Datenpakets (78, 156), das einen ersten Header (82, 158), einen zweiten Header (90), der eine höhere Komplexität als der erste Header (82, 158) aufweist, und eine Payload (100, 160) umfasst, wobei der erste Header (82, 158) durch einen ersten, analogen Modus verarbeitet wird, und wobei der zweite Header (90) sowie die Payload (100, 160) durch einen zweiten, digitalen Modus verarbeitet werden, wobei eine Anzahl an Verarbeitungsschritten (172, 174) zur Durchführung des zweiten Modus größer als eine Anzahl an Verarbeitungsschritten (168, 170) zur Durchführung des ersten Modus ist, wobei die beiden Modi voneinander getrennt ausgeführt werden, wobei zum Übertragen des Datenpakets (78, 156) für den ersten Header (82, 158) ein erster Übertragungsmodus mit einem, zur Ermittlung einer Empfängeradresse erforderlichen, reduzierten Energiebedarf und für den zweiten Header (90) sowie die Payload (100, 160) ein zweiter Übertragungsmodus verwendet wird.

2. Verfahren nach Anspruch 1, bei dem eine Anzahl an Rechenoperationen zur Durchführung des zweiten Modus größer als eine Anzahl an Rechenoperationen zur Durchführung des ersten Modus ist.

3. Netzwerkknoten für ein Netzwerk (124, 150) zum Verarbeiten mindestens eines Datenpakets (78, 156), das einen ersten Header (82, 158), einen zweiten Header (90), der eine höhere Komplexität als der erste Header (82, 158) aufweist, und eine Payload (100, 160) aufweist, wobei der Netzwerkknoten (120, 152, 154) dazu ausgebildet ist, den ersten Header (82, 158) mit einem ersten, analogen Modus und den zweiten Header (90) sowie die Payload (100, 160) mit einem zweiten, digitalen Modus zu verarbeiten, wobei eine Anzahl an Verarbeitungsschritten (172, 174) zur Durchführung des zweiten Modus größer als eine Anzahl an Verarbeitungsschritten (168, 170) zur Durchführung des ersten Modus ist, wobei der Netzwerkknoten (120, 152, 154) die beiden Modi voneinander getrennt ausführt, wobei der Netzwerkknoten (120, 152, 154) ausgebildet ist, einen zum Übertragen des Datenpakets (78, 156) für den ersten Header (82, 158) verwendeten ersten Übertragungsmodus mit einem, zur Ermittlung einer Empfängeradresse erforderlichen, reduzierten Energiebedarf und für den zweiten Header (90) sowie die Payload (100, 160) verwendeten zweiten Übertragungsmodus zu verarbeiten.

4. Netzwerkknoten nach Anspruch 3, der einen ersten Bereich (126, 162) zum Verarbeiten des ersten Headers (82, 158) mit dem ersten Modus und einen zweiten Bereich (132, 164) zum Verarbeiten des zweiten Headers (90) sowie der Payload (100, 160) mit dem zweiten Modus aufweist.

5. Netzwerkknoten nach Anspruch 3 oder 4, der einen ersten Empfangspfad (128, 182) für den ersten Header (82, 158) und einen zweiten Empfangspfad (134, 164) für den zweiten Header (90) sowie die Payload (100, 160) aufweist.

6. Netzwerkknoten nach Anspruch 4 oder 5, bei dem der erste Bereich (126, 162) ein Adressauswertemodul (130) aufweist, das überprüft, ob das Datenpaket (78, 156) an den Netzwerkknoten (120, 152, 154) gerichtet ist oder nicht.

7. Netzwerkknoten nach einem der Ansprüche 4 bis 6, bei dem mindestens eine Komponente des zweiten Bereichs (132, 164) den zweiten Header (90) sowie die Payload (100, 160) verarbeitet, wenn das Datenpaket an den Netzwerkknoten (120, 152, 154) gerichtet ist.

8. Netzwerkknoten nach einem der Ansprüche 4 bis 7, bei dem der erste Bereich (126, 162) mindestens einer Komponente des zweiten Bereichs (132) eine Aufwachinformation (138, 180) bereitstellt, falls das Datenpaket (78, 156) an den Netzwerkknoten (120, 152, 154) gerichtet ist.

## Claims

1. Method for processing at least one data packet (78, 156) comprising a first header (82, 158), a second header (90), which has a higher complexity than the first header (82, 158), and a payload (100, 160), wherein the first header (82, 158) is processed by a first, analogue mode, and wherein the second header (90) and the payload (100, 160) are processed by a second, digital mode, wherein a number of processing steps (172, 174) for performing the second mode is greater than a number of processing steps (168, 170) for performing the first mode, wherein the two modes are executed separately from one another, wherein for transmitting the data packet (78, 156) a first transmission mode having a reduced energy requirement necessary for ascertaining a receiver address is used for the first header (82, 158) and a second transmission mode is used for the second header (90) and the payload (100, 160).

2. Method according to Claim 1, in which a number of computation operations for performing the second mode is greater than a number of computation operations for performing the first mode.

3. Network node for a network (124, 150) for processing at least one data packet (78, 156) having a first header (82, 158), a second header (90), which has a higher complexity that the first header (82, 158), and a payload (100, 160), wherein the network node (120, 152, 154) is configured to process the first header (82, 158) using a first, analogue mode and to process the second header (90) and the payload (100, 160) using a second, digital mode, wherein a number of processing steps (172, 174) for performing the second mode is greater than the number of processing steps (168, 170) for performing the first mode, wherein the network node (120, 152, 154) executes the two modes separately from one another, wherein the network node (120, 152, 154) is configured to process a first transmission mode, used for the first header (82, 158) for transmitting the data packet (78, 156), having a reduced energy requirement necessary for ascertaining a receiver address, and a second transmission mode used for the second header (90) and the payload (100, 160).

4. Network node according to Claim 3, having a first area (126, 162) for processing the first header (82, 158) with the first mode and a second area (132, 164) for processing the second header (90) and the payload (100, 160) with the second mode.

5. Network node according to Claim 3 or 4, having a first reception path (128, 182) for the first header (82, 158) and a second reception path (134, 164) for the second header (90) and the payload (100, 160).

6. Network node according to Claim 4 or 5, in which the first area (126, 162) has an address evaluation module (130) that checks whether or not the data packet (78, 156) is directed at the network node (120, 152, 154).

7. Network node according to one of Claims 4 to 6, in which at least one component of the second area (132, 164) processes the second header (90) and the payload (100, 160) if the data packet is directed at the network node (120, 152, 154).

8. Network node according to one of Claims 4 to 7, in which the first area (126, 162) provides at least one component of the second area (132) with wakeup information (138, 180) if the data packet (78, 156) is directed at the network node (120, 152, 154) .

## Revendications

1. Procédé de traitement d'au moins un paquet de données (78, 156), lequel comprend un premier en-tête (82, 158), un deuxième en-tête (90), qui présente une complexité supérieure à celle du premier en-tête (82, 158), et une charge utile (100, 160), le premier en-tête (82, 158) étant traité par un premier mode analogique et le deuxième en-tête (90) ainsi que la charge utile (100, 160) étant traitée par un deuxième mode numérique, un nombre d'étapes de traitement (172, 174) destinées à mettre en oeuvre le deuxième mode étant supérieur à un nombre d'étapes de traitement (168, 170) destinés à mettre en oeuvre le premier mode, les deux modes étant exécutés séparément l'un de l'autre, un premier mode de transmission, dont le besoin énergétique nécessaire pour la détermination d'une adresse de destinataire est réduit, étant utilisé pour la transmission du paquet de données (78, 156) pour le premier en-tête (82, 158) et un deuxième mode de transmission pour le deuxième en-tête (90) ainsi que pour la charge utile (100, 160).

2. Procédé selon la revendication 1, selon lequel un nombre d'opérations de calcul destinées à mettre en oeuvre le deuxième mode est supérieur à un nombre d'opérations de calcul destinées à mettre en oeuvre le premier mode.

3. Noeud de réseau pour un réseau (124, 150) pour le traitement d'au moins un paquet de données (78, 156), lequel comprend un premier en-tête (82, 158), un deuxième en-tête (90), qui présente une complexité supérieure à celle du premier en-tête (82, 158), et une charge utile (100, 160), le noeud de réseau (120, 152, 154) étant configuré pour traiter le premier en-tête (82, 158) avec un premier mode analogique et le deuxième en-tête (90) ainsi que la charge utile (100, 160) avec un deuxième mode numérique, un nombre d'étapes de traitement (172, 174) destinées à mettre en oeuvre le deuxième mode étant supérieur à un nombre d'étapes de traitement (168, 170) destinés à mettre en oeuvre le premier mode, le noeud de réseau (120, 152, 154) exécutant les deux modes séparément l'un de l'autre, le noeud de réseau (120, 152, 154) étant configuré pour traiter un premier mode de transmission, dont le besoin énergétique nécessaire pour la détermination d'une adresse de destinataire est réduit, utilisé pour la transmission du paquet de données (78, 156) pour le premier en-tête (82, 158) et un deuxième mode de transmission utilisé pour le deuxième en-tête (90) ainsi que pour la charge utile (100, 160).

4. Noeud de réseau selon la revendication 3, lequel possède une première zone (126, 162) destinée au traitement du premier en-tête (82, 158) avec le premier mode et une deuxième zone (132, 164) destinée au traitement du deuxième en-tête (90) ainsi que de la charge utile (100, 160) avec le deuxième mode.

5. Noeud de réseau selon la revendication 3 ou 4, lequel possède un premier chemin d'entrée (128, 182) pour le premier en-tête (82, 158) et un deuxième chemin d'entrée (134, 164) pour le deuxième en-tête (90) ainsi que pour la charge utile (100, 160).

6. Noeud de réseau selon la revendication 4 ou 5, dans lequel la première zone (126, 162) possède un module d'interprétation d'adresse (130) qui contrôle si le paquet de données (78, 156) est adressé ou non au noeud de réseau (120, 152, 154).

7. Noeud de réseau selon l'une des revendications 4 à 6, dans lequel au moins un composant de la deuxième zone (132, 164) traite le deuxième en-tête (90) ainsi que la charge utile (100, 160) lorsque le paquet de données est adressé au noeud de réseau (120, 152, 154).

8. Noeud de réseau selon l'une des revendications 4 à 7, dans lequel la première zone (126, 162) fournit à au moins un composant de la deuxième zone (132) une information de réveil (138, 180) dans le cas où le paquet de données (78, 156) est adressé au noeud de réseau (120, 152, 154).
